(19) Europäisches Patentamt
European Patent Office
Office européen des brevets

(11) EP 1 519 793 B1

(12) # FASCICULE DE BREVET EUROPEEN

(45) Date de publication et mention de la délivrance du brevet:
**30.04.2008 Bulletin 2008/18**

(21) Numéro de dépôt: **03760050.9**

(22) Date de dépôt: **17.06.2003**

(51) Int Cl.:
***B05D 1/38*** *(2006.01)* ***C08J 5/12*** *(2006.01)*
***C08J 7/04*** *(2006.01)*

(86) Numéro de dépôt international:
**PCT/FR2003/001831**

(87) Numéro de publication internationale:
**WO 2003/106054 (24.12.2003 Gazette 2003/52)**

(54) **PROCEDE DE REALISATION D UN ENSEMBLE COMPRENANT PLUSIEURS ELEMENTS EN SILICONE RETICULES PAR POLYADDITION ADHERANT FERMEMENT LES UNS AUX AUTRES**

VERFAHREN ZUR HERSTELLUNG EINES GEGENSTANDES VON VERSCHIEDENEN ANEINANDER KLEBENDEN, DURCH POLYADDITION HÄRTENDEN SILIKONSCHICHTEN

METHOD FOR PRODUCING AN ASSEMBLY COMPRISING SEVERAL MUTUALLY FIRMLY ADHERING ADDITION-POLYMERIZED SILICONE ELEMENTS

(84) Etats contractants désignés:
**AT BE BG CH CY CZ DE DK EE ES FI FR GB GR HU IE IT LI LU MC NL PT RO SE SI SK TR**

(30) Priorité: **17.06.2002 FR 0207445**

(43) Date de publication de la demande:
**06.04.2005 Bulletin 2005/14**

(73) Titulaire: **Bluestar Silicones France**
**69486 Lyon Cedex 03 (FR)**

(72) Inventeurs:
- **HOWE, Fabienne**
  **F-69300 Caluire (FR)**
- **POUCHELON, Alain**
  **F-69330 Meyzieu (FR)**

(74) Mandataire: **Fleurance, Raphaël et al**
**Cabinet Plasseraud**
**52 rue de la Victoire**
**75440 Paris Cedex 09 (FR)**

(56) Documents cités:
**EP-A- 0 431 979**
**EP-A- 0 647 477**
**EP-A- 0 702 068**
**EP-A- 0 866 164**
**GB-A- 2 045 824**
**US-A- 4 163 082**
**US-A- 4 874 671**

- **PATENT ABSTRACTS OF JAPAN vol. 1998, no. 05, 30 avril 1998 (1998-04-30) & JP 10 025698 A (FUJIMORI KOGYO KK), 27 janvier 1998 (1998-01-27)**

EP 1 519 793 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

Le domaine de l'invention est celui des articles réalisés en élastomère silicone réticulé par polyaddition de motifs ≡Si-H sur des motifs ≡Si-alcényle (de préférence ≡Si-Vinyle) appartenant à des polyorganosiloxanes (POS).

Les préparations silicones liquides permettant d'obtenir ces éléments réticulés sont notamment :

- o des compositions POS vulcanisables par polyaddition, à température ambiante (avec une activation possible à température plus élevée) bicomposantes (RTV II) voire présentées en monocomposant (RTV), présentant avantageusement une viscosité à 25°C au plus égale à 200.000 mPa.s, de préférence comprise entre 10 et 50.000 mPa.s;
- o des compositions POS vulcanisables par polyaddition, à la chaleur, bicomposantes voire monocomposantes, dénommées LSR et présentant avantageusement une viscosité à 25°C comprise entre 100 et 500.000 mPa.s;
- o des compositions POS vulcanisables par polyaddition, à la chaleur (EVC), présentant une consistance caoutchouteuse avec une viscosité à 25°C notablement supérieure à 1 million de mPa.s.

En particulier, on s'intéresse dans le cadre de l'invention à des compositions pour la réalisation d'articles comprenant plusieurs éléments en silicone mis en forme et réticulés de manière distincte et destinés à être solidaires les uns des autres.

Le problème majeur sous-jacent à de tels articles est celui de l'adhérence silicone/silicone. En effet, par nature un élastomère silicone est anti-adhérant, d'où la difficulté de solidariser l'une à l'autre deux couches ou deux masses d'élastomère silicone réticulé.

Il est par exemple décrit dans la demande de brevet européen EP 0 431 979 un produit silicone composite comportant un gel réticulé obtenu à partir de POS de type ≡Si-vinyle, par exemple le polydiméthylsiloxane à extrémités vinyldiméthylsilyles et des POS de type SiH par exemple le poly(méthylhydrogénosiloxy)(diméthylsiloxy)siloxane à extrémités triméthylsilyles qui réticule en présence de platine, sous activation thermique à 150°C, pendant 30 minutes. Sur ce gel silicone réticulé est appliqué un polyorganosiloxane POS mixte comprenant des motifs ≡SiH et des motifs ≡Si-Vinyle.

Vient ensuite la réticulation de ce POS mixte sous activation thermique. Toutefois, la composition formant le gel silicone ne comporte pas de silicone hyperalcénylé.

Ce problème d'adhérence silicone /silicone est particulièrement aigu dans les applications des élastomères silicone comme revêtement multicouche, par exemple de protection ou de renfort mécanique de différents supports souples, par exemple des supports fibreux, tissés ou non.

En effet, même si généralement les enductions silicone sont monocouches pour des raisons économiques évidentes, il est des applications qui exigent une résistance à de très fortes sollicitations sur de très longues durées de vie et donc des revêtements silicone multicouches.

Il en est notamment ainsi de l'application relative à la fabrication de sacs de protection individuelle d'occupant de véhicules, dénommés également "airbags".

Traditionnellement, ces derniers sont formés par une toile en fibre synthétique, par exemple en polyamide (Nylon®), recouverte sur au moins l'une des faces d'une couche ou d'un revêtement de protection (composite) qui est dicté par le fait que les gaz libérés par le générateur de gaz en cas de choc, sont extrêmement chauds et contiennent des particules incandescentes susceptibles d'endommager le sac en polyamide.

La couche de protection interne en élastomère doit donc être particulièrement résistante aux hautes températures et aux contraintes mécaniques.

Il importe également que ce revêtement élastomère se présente sous la forme d'un film fin, uniforme et parfaitement adhérent au support en tissu synthétique, formant les parois de "l'airbag".

Une autre aptitude qui s'impose au revêtement élastomère est celle de la tenue au vieillissement, i.e. de la préservation dans le temps des propriétés thermiques, mécaniques et d'adhésion. Le composite doit donc offrir une très bonne résistance à la fatigue et ce pendant toute la durée de vie de l'"airbag", c'est à dire de l'ordre de 15 ans. Cette résistance à la fatigue est, dans la profession, jugée par le test "Scrub" qui opère par froissements répétés du tissu ; celui-ci doit couramment résister à près de 1000 froissements sans présenter de défauts d'adhérence entre silicone et textile et le cas échéant entre les diverses couches de silicone. Cette dernière propriété requiert généralement de complexes artifices de formulation et de mise en oeuvre.

Dans un autre domaine, celui du moulage de grandes pièces techniques, l'adhérence entre deux massifs de silicone est aussi une propriété délicate à obtenir. Ce cas correspond par exemple au cas de grandes pièces moulées qui ne peuvent être obtenues en une coulée unique voire aussi à la réparation de moules ou de pièces endommagés. Il faut alors bien souvent avoir recours à des traitements qui malgré la complexité qu'ils engendrent n'offrent jamais l'assurance de la réussite.

Dans cet état de la technique, l'un des objectifs essentiels de la présente invention est de proposer une solution avantageuse et performante au problème du manque d'adhérence silicone/silicone dans des ensembles comprenant

plusieurs éléments en élastomère silicone réticulé, ces ensembles pouvant être des composites -support souple (e.g. tissu, grille ou film plastique)/revêtement silicone élastomère multicouche, ou des articles plus massifs comportant un premier bloc de silicone élastomère RTV, EVC ou LSR réticulé, destiné à adhérer à plus ou moins longue échéance avec une ou plusieurs couches ou pièces de même nature que ce premier bloc (e.g. articles moulés ou moules).

Un autre objectif essentiel de l'invention est de fournir un procédé de réalisation d'un ensemble comprenant plusieurs éléments en silicone réticulés par polyaddition de motifs ≡Si-H sur des motifs ≡Si-alcényle (de préférence ≡Si-vinyle), ces éléments adhérant fermement les uns aux autres, sans nuire aux propriétés mécaniques des éléments en silicone réticulés.

Un autre objectif essentiel de l'invention est de fournir un procédé de réalisation d'un ensemble comprenant plusieurs éléments en silicone réticulés par polyaddition de motifs ≡Si-H sur des motifs ≡Si-alcényle (de préférence ≡Si-vinyle), ces éléments adhérant fermement les uns aux autres, sans nuire aux propriétés d'hydrofugation et/ou d'oléophobie des éléments en silicone réticulés, exploitées dans certaines applications.

Un autre objectif essentiel de l'invention est de fournir un procédé de réalisation d'un ensemble comprenant plusieurs éléments en silicone réticulés par polyaddition de motifs ≡Si-H sur des motifs ≡Si-alcényle (de préférence ≡Si-vinyle), ces éléments adhérant fermement les uns aux autres, sans nuire aux qualités esthétiques des éléments en silicone réticulés, exploitées dans certaines applications.

Un autre objectif essentiel de l'invention est de fournir une déclinaison du procédé visé au paragraphe précédent et consistant en un procédé d'enduction multicouche d'un support souple (notamment fibreux ou polymère, e.g. textile) à l'aide de compositions élastomères silicones réticulables, permettant la fabrication de composites dans lesquels le multicouche adhère parfaitement au support souple et présente une structure homogène et cohérente, peu ou pas sujette à la délamination des couches d'élastomère silicone réticulé qui adhèrent bien les unes aux autres.

Un autre objectif essentiel de l'invention est de fournir une déclinaison du procédé visé au paragraphe précédent et consistant en un procédé de moulage discontinu de pièces en silicone, parfaitement collées les unes aux autres, au point de ne former in fine qu'un ensemble cohérent et homogène sur le plan physique.

Un autre objectif visé par les inventeurs a été la mise au point de compositions silicones adaptées à la réalisation d'un composite constitué par un support souple (notamment fibreux ou polymère, e.g. textile) revêtu d'une enduction multicouche en élastomère silicone réticulé, ladite enduction multicouche adhérant parfaitement au support et comprenant des couches en silicone réticulé adhérant également parfaitement les unes aux autres et donc n'étant que peu ou pas sujettes à la délamination.

Un autre objectif visé par les inventeurs a été la mise au point de compositions silicones adaptées à la réalisation d'un composite constitué par un support souple (notamment fibreux ou polymère, e.g. textile) revêtu d'une enduction multicouche en élastomère silicone réticulé, caractérisée par une bonne cohésion, de bonnes propriétés mécaniques, une bonne résistance à la froissabilité (test "scrub"), de bonnes propriétés d'hydrofugation/oléophobisation, un bel aspect, et, sur sa ou ses faces externes des propriétés d'anti-adhérence.

Ces objectifs, parmi d'autres, sont atteints par la présente invention qui concerne tout d'abord un procédé de réalisation d'un ensemble comprenant plusieurs éléments en silicone réticulés par polyaddition de motifs ≡Si-H sur des motifs ≡Si-alcényle (de préférence ≡Si-vinyle), ces éléments adhérant fermement les uns aux autres,
caractérisé en ce qu'il comprend les étapes essentielles suivantes:

- (I) mise en forme d'un élément en silicone (i) à l'aide d'une préparation silicone liquide (i) comprenant:

    - des polyorganosiloxanes (POS) -A- à motifs ≡Si-alcényle (de préférence ≡Si-vinyle),
    - des polyorganosiloxanes (POS) -B- à motifs ≡Si-H,
    - au moins un catalyseur -C- métallique -de préférence au Platine-,
    - éventuellement au moins une résine POS -D- porteuse de motifs ≡Si-alcényle (de préférence ≡Si-vinyle),
    - éventuellement au moins un inhibiteur de réticulation -E-,
    - éventuellement au moins un promoteur d'adhérence -F-,
    - éventuellement au moins une charge minérale -G-,
    - éventuellement au moins un additif fonctionnel pour conférer des propriétés spécifiques -H-,

- (II) réticulation de la préparation silicone liquide (i) mise en forme à l'étape (I), la composition de cette préparation et les conditions de réticulation étant choisies de telle sorte que l'élément silicone réticulé (i) présente une densité surfacique DS en groupements alcényle -de préférence Vinyle- ou hydrogène, résiduels n'ayant pas réagi, par nanomètre carré définie comme suit:

$$DS \geq 0{,}0015$$

de préférence

$$DS \geq 0{,}0030$$

et plus préférentiellement encore

$$0{,}0100 \geq DS \geq 0{,}0040$$

- **(III)** éventuelle répétition des étapes (I) et (II) n (nombre entier positif) fois, de manière à obtenir n éléments (i) adhérant les uns aux autres,

- **(IV)** mise en forme d'un élément en silicone (ii) consistant à mettre en contact l'élément ou le dernier élément en silicone réticulé (i) avec une préparation silicone liquide (ii) comprenant:

  - des polyorganosiloxanes (POS) -A'- à motifs ≡Si-alcényle (de préférence ≡Si-vinyle),
  - des polyorganosiloxanes (POS) -B'- à motifs ≡Si-H,
  - au moins un catalyseur -C'- métallique -de préférence au Platine-,
  - éventuellement au moins une résine POS -D'- porteuse de motifs ≡Si-alcényle (de préférence ≡Si-vinyle),
  - éventuellement au moins un inhibiteur de réticulation -E'-,
  - éventuellement au moins un promoteur d'adhérence -F'-,
  - éventuellement au moins une charge minérale -G'-,
  - éventuellement au moins un additif fonctionnel pour conférer des propriétés spécifiques -H'-,

- **(V)** réticulation de la préparation silicone liquide (ii) mise en forme à l'étape (IV) pour obtenir l'élément en silicone réticulé (ii) adhérant à l'élément ou au dernier élément (i).

Il est du mérite des inventeurs d'avoir mis en oeuvre dans un mode opératoire façonnage/réticulation séquentiel des formulations, spécifiques et judicieusement sélectionnées, de préparations liquides POS réticulables par polyaddition (hydrosilylation) en élastomères silicone et propres à conférer à l'élément en silicone réticulé (i) qu'elles permettent de confectionner, des propriétés de surface telles qu'elles permettent un excellent ancrage d'un autre élément en silicone réticulé obtenu de la même façon que l'élément (i) avec une préparation POS liquide réticulable (ii) de nature identique ou différente à la préparation (i).

La composition POS (i) comprenant les composants ABC (éventuellement DEFG) de l'étape (I) détermine la force de la liaison avec l'élément silicone réticulé (i) ou (ii) qui viendra subséquemment en contact avec l'élément (i) réalisé à partir de cette composition POS (i) comprenant les composants ABC (éventuellement DEFG).

L'invention permet de réaliser des ensembles d'éléments différenciés, et en particulier des stratifiés, en élastomère silicone réticulés qui sont cohésifs et qui présentent par ailleurs d'excellentes propriétés mécaniques, d'hydrofugation/oléophobisation, d'anti-adhérence superficielle et l'aspect conventionnel des compositions silicones. La composante économique ne s'en trouve pas sacrifiée pour autant.

Même dans le cas où l'élément extérieur (ii) de l'ensemble en silicone réticulé comprendrait la composition (i) promotrice d'adhérence silicone/silicone, les propriétés d'anti-adhérence vis à vis d'autres matériaux sont préservées.

La densité surfacique DS en groupements réactifs résiduels se définit par le nombre de ces groupements par unité de surface dans la couche superficielle extrême du matériau considéré. Dans le cas des silicones, la couche monomoléculaire est épaisse de 0,75 nm.

$$\text{Nombre de groupements} / nm^2$$

La méthode de mesure de DS de référence est donnée ci-après.

Suivant une caractéristique préférée du procédé selon l'invention, on sélectionne une préparation silicone liquide (i) dans laquelle le ratio R des motifs ≡Si-H sur les motifs ≡Si-alcényle (de préférence ≡Si-Vinyle) est défini comme suit :

$$R \leq 1$$

de préférence

$$0,80 \leq R \leq 0,98.$$

Le fait de contrôler la stoechiométrie de réaction d'hydrosilylation des motifs ≡Si-alcényle (de préférence ≡Si-Vinyle) par les motifs ≡Si-H, de manière à générer un résidu de motifs réactifs, notamment en surface, est délicat et avantageux. Ceci est très révélateur de l'activité inventive du procédé selon l'invention.

Il est préférable que les motifs résiduels soient les motifs ≡Si-alcényle (de préférence ≡Si-Vinyle).

Plusieurs moyens sont envisageables pour enrichir la préparation POS (i) liquide comprenant les composants ABC(éventuellement DEFG) de l'étape (I). Selon une variante avantageuse de l'invention, cette préparation (i) est un mélange de POS alcénylés -de préférence vinylés- et comprend au moins un POS -A°- hyperalcénylé (de préférence hypervinylé) pourvoyeur de motifs ≡Si-alcényle (de préférence ≡Si-Vinyle), dont la teneur est supérieure ou égale à au moins 2% en nombre, de préférence supérieure ou égale au moins 3 %, et, plus préférentiellement encore comprise entre 3 et 10 % en nombre, les motifs ≡Si-alcényle (de préférence ≡Si-Vinyle) étant avantageusement essentiellement portés par des motifs siloxyle D: $-R_2SiO_{2/2}-$; [avec R répondant à la même définition que celle donnée pour Z ci-après en légende des formules (1)(2)(3)(4)].

Le procédé selon l'invention se décline avantageusement en un procédé d'enduction silicone stratifiée sur tout support, par exemple tissu, non tissé, film polymère...... Un tel procédé peut être caractérisé:

- o en ce que l'ensemble réalisé comporte un support -de préférence souple- et plusieurs éléments en silicone réticulé formant un revêtement multicouche adhérant sur le support ;
- o et en ce que :
  - l'étape (I) consiste en une application de la préparation silicone liquide (i) sur le support pour former une couche de silicone réticulé (i),
  - et l'étape (IV) consiste en une application de la préparation silicone liquide (ii) sur la couche ou la dernière couche de silicone réticulé (i) et porteuse de groupements réactifs résiduels en surface, pour former une couche de silicone réticulé (ii).

Dans le cas où l'on a affaire à des éléments en silicone réticulé massif, on ne parlera plus alors de couches superposées, mais de pièces assemblées les unes aux autres. Selon une variante, il peut s'agir d'un procédé de moulage discontinu (par exemple de gros articles). Dans ce cas, l'ensemble réalisé est un objet moulé en silicone. Selon une autre variante, il peut s'agir du processus de réalisation d'un moule en silicone en plusieurs étapes (ou réparation d'un moule usagé).

Dans certaines des variantes de la technique selon l'invention, les étapes (IV) et (V) ne sont mises en oeuvre qu'après une interruption prolongée du procédé. En effet, l'élément ou le dernier élément (i) en élastomère silicone réticulé (e.g. la couche) obtenu à l'issue des étapes (I) & (II), voire (III) est donc chargé en résidus réactifs en surface Il est propre à conserver cet état pendant une longue période, de sorte que l'on peut différer l'ancrage de l'élément (e.g. la couche) (ii) subséquent (étapes (IV) & (V)), voire de l'éventuel ou des éventuels (i) supplémentaires. Par "longue période", on entend par exemple jusqu'à une semaine.

Selon une caractéristique avantageuse de l'invention, la dernière préparation silicone liquide (ii) est identique ou différente de la ou de la dernière préparation silicone liquide (i) et de préférence différente, et, plus préférentiellement encore exempte de POS hyperalcénylé -A°-.

En effet, il peut être intéressant que l'élément silicone réticulé (ii) externe présente des propriétés d'anti-adhérence optimisées, ce qui n'est pas la vocation première d'un élément (e.g. couche) (i) issu de la préparation POS liquide comprenant les composants ABC(DEFG).

Suivant une modalité remarquable de l'invention, les POS (-A- & -A'-) choisis présentent des motifs siloxyle de formule:

$$W_a \, Z_b \, SiO_{(4-(a+b))/2} \qquad (1)$$

dans laquelle:

- les symboles W, identiques ou différents, représentent chacun un groupe alcényle, de préférence un alcényle en $C_2$-$C_6$;
- les symboles Z, identiques ou différents, représentent chacun un groupe hydrocarboné monovalent non hydrolysable, exempt d'action défavorable sur l'activité du catalyseur, éventuellement halogéné et, de préférence choisi parmi les groupes alkyles ayant de 1 à 8 atomes de carbone inclus, ainsi que parmi les groupes aryles,
- a est 1 ou 2, b est 0, 1 ou 2 et a + b est compris entre 1 et 3,
- éventuellement au moins une partie des autres motifs sont des motifs de formule moyenne:

$$Z_c\ SiO_{(4-c)/2} \qquad (2)$$

dans laquelle Z a la même signification que ci-dessus et c a une valeur comprise entre 0 et 3.

Les POS (-A-&-A'-) peuvent être très majoritairement formés de motifs de formule (1) ou peuvent contenir, en outre, des motifs de formule (2). De même, ils peuvent présenter une structure linéaire. Leur degré de polymérisation est, de préférence, compris entre 2 et 5 000.

Z est généralement choisi parmi les radicaux méthyle, éthyle et phényle, 60 % molaire au moins des radicaux Z étant des radicaux méthyle.

Des exemples de motifs siloxyle de formule (1) sont le motif vinyldiméthylsiloxane, le motif vinylphénylméthylsiloxane et le motif vinylsiloxane.

Des exemples de motifs siloxyle de formule (2) sont les motifs $SiO_{4/2}$, diméthylsiloxane, méthylphénylsiloxane, diphénylsiloxane, méthylsiloxane et phénylsiloxane.

Des exemples de POS (-A-&-A'-) sont les diméthylpolysiloxanes à extrémités diméthylvinylsilyle, les copolymères méthylvinyldiméthylpolysiloxanes à extrémités triméthylsilyle, les copolymères méthylvinyldiméthylpolysiloxanes à extrémités diméthylvinylsilyle, les méthylvinylpolysiloxanes cycliques.

La viscosité dynamique $\eta_d$ de ce POS (-A-&-A'-) est comprise entre 0,01 et 500 Pa.s, de préférence entre 0,01 et 300 Pa.s.

De préférence, le POS (-A-&-A'-) comprend au moins 95 % de motifs siloxyle D: - $R_2SiO_{2/2}$ avec R répondant à la même définition que Z ou W, ce pourcentage correspondant à un nombre de motifs pour 100 atomes de silicium.

De préférence, les motifs alcényles W sont des vinyles portés par des motifs siloxyles D et éventuellement M et/ou T.

En ce qui concerne les POS (-B- & -B'-), les préférés sont choisis parmi ceux comprenant des motifs siloxyle de formule:

$$H_d\ L_e\ SiO_{(4-(d+e))/2} \qquad (3)$$

dans laquelle:

- les symboles L, identiques ou différents, représentent chacun un groupe hydrocarboné monovalent non hydrolysable, exempt d'action défavorable sur l'activité du catalyseur, éventuellement halogéné et, de préférence choisi parmi les groupes alkyles ayant de 1 à 8 atomes de carbone inclus, ainsi que parmi les groupes aryles ;
- d est 1 ou 2, e est 0, 1 ou 2 et d + e a une valeur comprise entre 1 et 3 ;
- éventuellement, au moins une partie des autres motifs étant des motifs de formule moyenne:

$$Lg\ SiO_{(4-g)/2} \qquad (4)$$

dans laquelle L a la même signification que ci-dessus et g a une valeur comprise entre 0 et 3.

A titre d'exemples de POS (-B- & -B'-), on peut citer le poly(diméthylsiloxane) (méthylhydrogénosiloxy) $\alpha$, $\omega$ diméthylhydrogénosiloxane.

Les POS (-B- & -B'-) peuvent être uniquement formés de motifs de formule (1) ou comportent en plus des motifs de formule (2).

Les POS (-B- & -B'-) peuvent présenter une structure linéaire, ramifiée, cyclique ou en réseau. Le degré de polymérisation est supérieur ou égal à 2. Plus généralement, il est inférieur à 100.

La viscosité dynamique $\eta_d$ de ce POS (-B- & -B'-) est comprise entre 5 et 1000 mPa.s, de préférence entre 10 et 500 mPa.s.

Le groupe L a la même signification que le groupe Z ci-dessus.

Des exemples de motifs de formule (1) sont: $H(CH_3)_2SiO_{1/2}$, $HCH_3SiO_{2/2}$, $H(C_6H_5)SiO_{2/2}$.

Les exemples de motifs de formule (2) sont les mêmes que ceux donnés plus haut pour les motifs de formule (2).

Des exemples de POS (-B- & -B'-) sont:

- les diméthylpolysiloxanes à extrémités hydrogénodiméthylsilyle,
- les copolymères à motifs (diméthyl)-(hydrogénométhyl)polysiloxanes à extrémités triméthylsilyle,
- les copolymères à motifs diméthyl-hydrogénométhylpolysiloxanes à extrémités hydrogénodiméthylsilyle,
- les hydrogénométhylpolysiloxanes à extrémités triméthylsilyle,
- les hydrogénométhylpolysiloxanes cycliques,
- les résines hydrogénosiloxaniques comportant des motifs siloxyles M: $R_3SiO_{1/2}$, Q: $SiO_{4/2}$ et/ou T: $RSiO_{3/2}$, éventuellement D: $-R_2SiO_{2/2}$, avec R = H ou répondant à la même définition que L.

Comme autres exemples de groupes hydrocarbonés Z ou L, monovalents susceptibles d'être présents dans les POS (A & A') / (-B- & -B'-) susvisés, on peut citer: le méthyle, l'éthyle ; le n-propyle ; l'i-propyle ; le n-butyle ; i-butyle ; t-butyle ; chlorométhyle ; dichlorométhyle ; α-chloroéthyle ; α, β-dichloroéthyle ; fluorométhyle ; difluorométhyle ; α, β-difluoroéthyle ; trifluoro-3,3,3-propyle ; trifluoro cyclopropyle ; trifluoro-4,4,4 butyle ; hexafluoro-3,3,5,5,5,5 pentyle ; β-cyanoéthyle, γ-cyanopropyle ; phényle ; p-chlorophényle ; m-chlorophényle ; dichloro-3,5-phényle ; trichlorophényle ; tétrachlorophényle ; o-, p- ou m-tolyle ; α, α, α-trifluorotolyle ; xylyles comme diméthyle-2,3 phényle ; diméthyle-3,4-phényle.
Ces groupements peuvent être éventuellement halogénés, ou bien encore être choisis parmi les radicaux cyanoalkyles. Les halogènes sont par exemple le fluor, le chlore, le brome et l'iode, de préférence le chlore ou le fluor.
Les POS (A & A') / (-B- & -B'-) peuvent être constitués de mélanges de différentes huiles silicone.
Ces POS (A & A') / (-B- & -B'-) peuvent être:

o des RTV tels que définis ci-dessus et dans les brevets US-B- 3,220,972; 3,284,406; 3,436,366; 3,697,473; 4,340,709;
o des LSR tels que définis ci-dessus;
o ou des EVC tels que définis ci-dessus.

De préférence, les groupements alcényle W des POS (-A- & -A'-) et/ou des résines POS (-D- &-D'-) sont des groupements vinyle Vi, portés par des motifs siloxyle D éventuellement M et/ou T.
S'agissant des résines POS (D & D'), on préférera les sélectionner parmi celles, comportant au moins un reste alcényle dans leur structure, et cette résine présente une teneur pondérale en groupe(s) alcényle(s) comprise entre 0,1 et 20 % en poids et, de préférence, entre 0,2 et 10 % en poids.
Ces résines sont des oligomères ou polymères organopolysiloxanes ramifiés bien connus et disponibles dans le commerce. Elles se présentent sous la forme de solutions, de préférence siloxaniques. Elles présentent, dans leur structure, au moins deux motifs différents choisis parmi ceux de formule $R'_3SiO_{0,5}$ (motif M), $R'_2SiO$ (motif D), $R'SiO_{1,5}$ (motif T) et $SiO_2$ (motif Q), l'un au moins de ces motifs étant un motif T ou Q.
Les radicaux R' sont identiques ou différents et sont choisis parmi les radicaux alkyles linéaires ou ramifiés en $C_1$-$C_6$, les radicaux alcényles en $C_2$-$C_4$ phényle, trifluoro-3,3,3 propyle. On peut citer par exemple : comme radicaux R' alkyles, les radicaux méthyle, éthyle, isopropyle, tertiobutyle et n-hexyle, et comme radicaux R' alcényles, les radicaux vinyles.
On doit comprendre que dans les résines POS (D & D') du type précité, une partie des radicaux R' sont des radicaux alcényles.
Comme exemples d'oligomères ou de polymères organopolysiloxanes ramifiés, on peut citer les résines MQ, les résines MDQ, les résines TD et les résines MDT, les fonctions alcényles pouvant être portées par les motifs M, D et/ou T.
Comme exemple de résines qui conviennent particulièrement bien, on peut citer les résines MDQ ou MQ vinylées ayant une teneur pondérale en groupes vinyle comprise entre 0,2 et 10 % en poids, ces groupes vinyle étant portés par les motifs M et/ou D.
Cette résine de structure est avantageusement présente dans une concentration comprise entre 10 et 90 % en poids par rapport à l'ensemble des constituants de la composition, de préférence entre 20 et 70 % en poids et, plus préférentiellement encore, entre 25 et 60 % en poids.
La réaction de polyaddition est bien connue par l'homme du métier. On peut d'ailleurs utiliser un catalyseur dans cette réaction. Ce catalyseur peut notamment être choisi parmi les composés du platine et du rhodium. On peut, en particulier, utiliser les complexes du platine et d'un produit organique décrits dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur généralement préféré est le platine. Dans ce cas, la quantité pondérale de catalyseur (C), calculée en poids de platine-métal, est généralement comprise entre 2 et 400 ppm, de préférence entre 5 et 100 ppm basés sur le poids total des POS (A & A'), (B &B').
Dans les systèmes monocomposants, les préparations élastomères silicone comprennent en outre au moins

un ralentisseur (E) de la réaction d'addition (inhibiteur de réticulation), choisi parmi les composés suivants :

- polyorganosiloxanes, avantageusement cycliques et substitués par au moins un alcényle, le tétraméthylvinyltétrasiloxane étant particulièrement préféré,
- la pyridine,
- les phosphines et les phosphites organiques,
- les amides insaturés,
- les maléates alkylés,
- et les alcools acétyléniques.

Ces alcools acétyléniques, (Cf. FR-B-1 528 464 et FR-A-2 372 874), qui font partie des bloqueurs thermiques de réaction d'hydrosilylation préférés, ont pour formule:

$$R\text{-}(R')C(OH)\text{-}C{\equiv}CH$$

formule dans laquelle :

- R est un radical alkyle linéaire ou ramifié, ou un radical phényle ;
- R' est H ou un radical alkyle linéaire ou ramifié, ou un radical phényle ;
- les radicaux R, R' et l'atome de carbone situé en $\alpha$ de la triple liaison pouvant éventuellement former un cycle ;
- le nombre total d'atomes de carbone contenu dans R et R' étant d'au moins 5, de préférence de 9 à 20.

Lesdits alcools sont, de préférence, choisis parmi ceux présentant un point d'ébullition supérieur à 250°C. On peut citer à titre d'exemples:

- l'éthynyl-1-cyclohexanol 1 ;
- le méthyl-3 dodécyne-1 ol-3 ;
- le triméthyl-3,7,11 dodécyne-1 ol-3 ;
- le diphényl-1,1 propyne-2 ol-1 ;
- l'éthyl-3 éthyl-6 nonyne-1 ol-3 ;
- le méthyl-3 pentadécyne-1 ol-3.

Ces alcools $\alpha$-acétyléniques sont des produits du commerce.
Un tel ralentisseur (E) est présent à raison de 3 000 ppm au maximum, de préférence à raison de 100 à 2000 ppm par rapport au poids total des organopolysiloxanes (A & A') et (B & B').
Dans un mode de réalisation avantageux du procédé selon l'invention, on peut utiliser un promoteur d'adhérence (F). Ce promoteur d'adhérence (F) peut par exemple comprendre :

(F.1) au moins un organosilane alcoxylé répondant à la formule générale suivante :

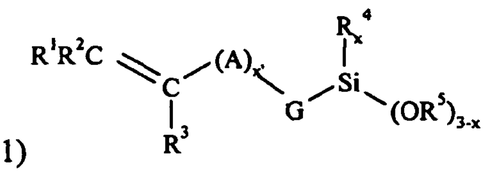

(F.1)

dans laquelle :

- $R^1$, $R^2$, $R^3$ sont des radicaux hydrogénés ou hydrocarbonés identiques ou différents entre eux et représentant l'hydrogène, un alkyle linéaire ou ramifié en $C_1$-$C_4$ ou un phényle éventuellement substitué par au moins un alkyle en $C_1$-$C_3$ ;
- A est un alkylène linéaire ou ramifié en $C_1$-$C_4$ ;
- G est un lien valenciel ;
- $R^4$ et $R^5$ sont des radicaux identiques ou différents et représentent un alkyle en $C_1$-$C_4$ linéaire ou ramifié ;
- x' = 0 ou 1 ;
- x = 0 à 2 ;

ledit composé (F.1) étant de préférence du vinyltriméthoxysilane (VTMS) ;
(F.2) au moins un composé organosilicié comprenant au moins un radical époxy, ledit composé (F.2) étant de préférence du 3-Glycidoxypropyltriméthoxysilane (GLYMO) ;
(F.3) au moins un chélate de métal M et/ou un alcoxyde métallique de formule générale M $(OJ)_n$, avec n = valence de M et J = alkyle linéaire ou ramifié en $C_1$-$C_8$, M étant choisi dans le groupe formé par : Ti, Zr, Ge, Li, Mn, Fe, Al, Mg, ledit composé (F.3) étant de préférence du titanate de tert.butyle.

Les proportions des (F.1), (F.2) et (F.3), exprimée en % en poids par rapport au total des trois, sont de préférence les suivantes :

$$(F.1) \geq 10,$$

$$(F.2) \geq 10,$$

$$(F.3) \leq 80.$$

Par ailleurs, ce promoteur d'adhérence (F) est de préférence présent à raison de 0,1 à 10 %, de préférence 0,5 à 5 % et plus préférentiellement encore 1 à 2,5 % en poids par rapport à l'ensemble des constituants de la préparation.
Les préparations utilisées dans le procédé selon l'invention peuvent comprendre une charge (G & G') qui sera de préférence minérale. Elle peut être constituée par des produits choisis parmi les matières siliceuses (ou non).
S'agissant des matières siliceuses, elles peuvent jouer le rôle de charge renforçante ou semi-renforçante.
Les charges siliceuses renforçantes sont choisies parmi les silices colloïdales, les poudres de silice de combustion et de précipitation ou leur mélange.
Ces poudres présentent une taille moyenne de particule généralement inférieure à 0,1 μm et une surface spécifique BET supérieure à 50 $m^2/g$, de préférence comprise entre 100 et 300 $m^2/g$.
Les charges siliceuses semi-renforçantes telles que des terres de diatomées ou du quartz broyé, peuvent être également employées.
En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, la zircone, un zirconate, la vermiculite non expansée, le carbonate de calcium, l'oxyde de zinc, le mica, le talc, l'oxyde de fer, le sulfate de baryum et la chaux éteinte. Ces charges ont une granulométrie généralement comprise entre 0,1 et 300 μm et une surface BET inférieure à 100 $m^2/g$.
De façon pratique mais non limitative, la charge employée est une silice.
La charge peut être traitée à l'aide de tout agent de compatibilisation approprié et notamment l'hexaméthyldisilazane. Pour plus de détails à cet égard, on peut se référer par exemple au brevet FR-B-2 764 894.
Sur le plan pondéral, pour les charges renforçantes, on préfère mettre en oeuvre une quantité de charge comprise entre 5 et 35, de préférence entre 7 et 30 % en poids par rapport à l'ensemble des constituants de la préparation. Les charges non renforçantes peuvent être utilisées à plus forte teneur.
Concernant les additifs fonctionnels (H) susceptibles d'être mise en oeuvre, il peut s'agir de produits couvrants tels que par exemple des pigments/colorants ou des stabilisants.
Dans le procédé selon l'invention, on peut également utiliser un système bicomposant précurseur des préparations. Ce système bicomposant est caractérisé:

- en ce qu'il se présente en deux parties P1 et P2 distinctes destinées à être mélangées pour former la composition
- en ce que l'une de ces parties P1 et P2 comprend le catalyseur (C) et une seule espèce (A ou A') ou (B ou B') de polyorganosiloxane; et
- en ce que la partie P1 ou P2 contenant le polyorganosiloxane (B ou B') est exempte de composé (F.3) du promoteur (F).

C'est ainsi que la composition peut, par exemple, être constituée d'une partie P1 comprenant les composés (F.1) et (F.2) tandis que la partie P2 contient le composé (F.3).
Pour obtenir la composition élastomère silicone bicomposant P1 - P2.

Dans le cas où une charge est mise en oeuvre, il est avantageux de préparer tout d'abord un empâtage primaire en mélangeant une charge minérale, au moins une partie du POS (B ou B'), ainsi qu'au moins une partie du polyorganosiloxane (A ou A').

Cet empâtage sert de base pour obtenir, d'une part, une partie A résultant du mélange de ce dernier avec le polyorganosiloxane (B ou B') éventuellement un inhibiteur de réticulation et enfin les composés (F.1) et (F.2) du promoteur (F). La partie P1 est réalisée par mélange d'une partie de l'empâtage visé ci-dessus et de polyorganosiloxane (A ou A'), de catalyseur (Pt) et du composé (F.3) du promoteur (F).

La viscosité des parties P1 et P2 et de leur mélange peut être ajustée en jouant sur les quantités des constituants et en choisissant les polyorganosiloxanes de viscosité différente.

Dans le cas où un ou plusieurs additifs fonctionnels (H) sont employés, ils sont répartis dans les parties P1 et P2 selon leur affinité avec le contenu de P1 et P2.

Une fois mélangées l'une à l'autre les parties P1 et P2 forment une préparation élastomère silicone (RTV-2) prête à l'emploi, qui peut être par exemple appliquée sur un support par tout moyen d'imprégnation approprié (par exemple foulardage), et éventuellement tout moyen d'enduction approprié (par exemple racle ou cylindre).

La réticulation de la composition silicone liquide (fluide) appliquée sur le support à revêtir, est généralement activée par exemple en chauffant le support imprégné, voire revêtu, à une température comprise entre 50 et 200°C, en tenant bien évidemment compte de la résistance maximale du support à la chaleur.

Selon un autre de ses aspects, la présente invention vise également une formulation silicone liquide, qui est utilisable notamment comme préparation silicone liquide (i) dans le procédé tel que décrit ci-dessus, et qui comprend :

- des polyorganosiloxanes (POS) -A- à motifs ≡Si-alcényle (de préférence ≡Si-vinyle),
- des polyorganosiloxanes (POS) -B- à motifs ≡Si-H,
- au moins un catalyseur -C- métallique -de préférence au Platine-,
- éventuellement au moins une résine POS -D- porteuse de motifs ≡Si-alcényle (de préférence ≡Si-vinyle),
- éventuellement au moins un inhibiteur de réticulation -E-,
- éventuellement au moins un promoteur d'adhérence -F-,
- éventuellement au moins une charge minérale -G-,
- éventuellement au moins un additif fonctionnel -H- pour conférer des propriétés spécifiques;

caractérisée par un ratio R des motifs ≡Si-H sur les motifs ≡Si-alcényle (de préférence ≡Si-Vinyle) défini comme suit :

$$R \leq 1$$

de préférence

$$0,80 \leq R \leq 0,98,$$

et par une teneur en motifs ≡Si-alcényle (de préférence ≡Si-Vinyle) supérieure ou égale à au moins 2% en nombre, de préférence supérieure ou égale à au moins 3 %, et, plus préférentiellement encore comprise entre 2 et 10 % en nombre, les motifs ≡Si-alcényle (de préférence ≡Si-Vinyle) étant avantageusement essentiellement portés par des motifs siloxyle D : $-R_2SiO_{2/2}-$.

Les composants -A- à -H- de cette formulation répondent à la même définition que celle donnée ci-dessus en référence à la description de la préparation silicone liquide (i) mise en oeuvre dans le procédé selon l'invention.

Un autre objet de l'invention est constitué par un composite ou un revêtement élastomère silicone réticulé multicouche susceptible d'être obtenu par le procédé défini ci-dessus, caractérisé en ce qu'il présente une résistance à la délamination de ses couches, mesurée selon un test T, supérieure à 1 N/cm, de préférence supérieure à 2 N/cm et plus préférentiellement encore supérieure à 3 N/cm.

A la connaissance des inventeurs, des valeurs de résistance à la délamination aussi élevées n'ont jamais été atteintes pour un composite de ce type.

Le procédé selon l'invention n'est pas limité à deux étapes d'application et de réticulation des compositions de silicone pour obtenir des composites ayant uniquement deux couches d'élastomère silicone. Il est en effet entendu que les étapes d'application et de réticulation (III) et (IV) peuvent se répéter autant que nécessaire, pour l'obtention du nombre de couches d'élastomère silicone désiré.

Toutes les viscosités dont il est question dans la présente demande, correspondent à une grandeur de viscosité dynamique à 25°C, c'est-à-dire la viscosité dynamique qui est mesurée, de manière connue en soi, à un gradient de

vitesse de cisaillement suffisamment faible pour que la viscosité mesurée soit indépendante du gradient de vitesse.

Les exemples, qui suivent ont pour vocation d'illustrer des modes de réalisation particuliers de l'invention sans pour autant limiter la portée de l'invention à ces simples modes de réalisations.

**EXEMPLE I:**

**PREPARATION D'UNE COMPOSITION DE SILICONE DE REFERENCE**

Dans un réacteur à température ambiante, on mélange progressivement, dans les proportions indiquées ci-après (parties en poids) :

- 47,7 parties d'une résine M M(Vi) D(Vi) DQ contenant env. 0.6% de Vi ;
- 30,6 parties de PDMS α,ω diMeVi de viscosité 100 Pa.s contenant env. 0.08% deVi ;
- 15 parties de PDMS a,w diMeVi de viscosité 10 Pa.s contenant env. 0.135% de Vi ;
- 5 parties de poly (diMe) (Methyldrogénosiloxy) α,ω diMethyldrogéno siloxy, de viscosité 25mPa.s et contenant 20% de SiH ;
- 0,023 parties d'éthynylcyclohexanol ;
- 0,91 parties de vinyltriméthoxysilane ;
- 0,91 parties de 3-glycidoxypropyltriméthoxysilane ;
- 0,36 parties de titanate de butyle ;
- 0,02 parties de catalyseur de réticulation au platine Karstedt.

Dans la composition ci-dessus :

- Vi est le groupe vinyle, nom d'usage dans le métier pour désigner l'alcényle en $C_2$ de formule :

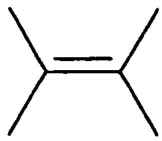

- et Me désigne le groupe méthyle.

**EXEMPLE II:**

**PREPARATIONS DE COMPOSITIONS DE SILICONE SELON L'INVENTION ET TESTS SUR CES COMPOSITIONS**

Dans un réacteur à température ambiante, on mélange progressivement, dans les proportions indiquées ci-après (parties en poids) :

**Préparation 1 selon l'invention**

1. 58,6 parties d'une résine M M(Vi) D(Vi) DQ contenant env. 0.6% de Vi ;
2. 23,3 parties de PDMS α,ω diMeVi de viscosité 100 Pa.s contenant env. 0.08% de Vi ;
3. 1,3 parties de PDMS α,ω diMeVi de viscosité 10 Pa.s contenant env. 0.135% de Vi ;
4. 7,3 parties de PDMS à motifs MeVi de viscosité 400 mPa.s contenant 2,5% de Vi ;
5. 7,3 parties de poly (diMe) (Mehydrogénosiloxy) α,ω diMehydrogéno siloxy, de viscosité 25mPa.s et contenant 20% de SiH ;
6. 0,023 parties d'ethynylcyclohexanol ;
7. 0,91 parties de vinyltriméthoxysilane ;
8. 0,91 parties de 3-glycidoxypropyltriméthoxysilane ;
9. 0,36 parties de titanate de butyle ;
10. 0,02 parties de catalyseur de réticulation au platine Karstedt.

**Préparation 2 selon l'invention**

Elle est identique à la préparation 1 sauf que la teneur en composant '5.' n'est introduite qu'à hauteur de 4,6 parties.

**Préparation 3 selon l'invention**

Elle est identique à la préparation 1 sauf que la teneur en composant '5.' n'est introduite qu'à hauteur de 3,7 parties.

**Préparation 4 selon l'invention**

Elle est identique à la préparation 1 sauf que la teneur en composant '5.' n'est introduite qu'à hauteur de 3,2 parties.

**Mesure des propriétés mécaniques des préparations de référence et 1 à 4**

Les préparations ci-dessus sont réticulées. On mesure la dureté Shore A, et les caractéristiques ultimes en extension selon les tests et normes connus et couramment mis en oeuvre par l'homme du métier. Les résultats sont présentés dans le tableau I ci-dessous.

Tableau 1

| | Référence | 1 | 2 | 3 | 4 |
|---|---|---|---|---|---|
| **Dureté Shore A** | 23 | 38 | 30 | 20 | 12 |
| **Allongement rupture (%)** | 195 | 145 | 155 | 125 | 165 |
| **Résistance rupture (MPa)** | 1,5 | 4,5 | 3,6 | 0,9 | 0,7 |

**Mesure de la densité surfacique des préparations 1-4**

La densité surfacique en groupements réactifs résiduels se définit par le nombre de ces groupements par unité de surface dans la couche superficielle extrême du matériau considéré. Dans le cas des silicones, la couche monomoléculaire est épaisse de 0,75 nm.

La densité surfacique résulte dès lors de la pondération des résultats d'une analyse à caractère volumique au prorata des épaisseurs considérées. On exprimera ainsi cette teneur en :

$$\text{nb groupements} / \text{nm}^2$$

Toute méthode d'analyse pertinente peut convenir à l'expression du résultat : méthodes chimiques comme méthodes spectrales.

Dans la pratique des pastilles de $1 cm^2$ ont été découpés dans les premières enductions réticulées déposées sur film polyester et une analyse chimique de ces pastilles a été pratiquée en procédant les étapes suivantes:

- attaque par le silicate d'éthyle au reflux
- identification et dosage des fragments résultants par chromatographie en phase gaz.

Les résultats obtenus sont présentés dans le tableau 2 ci-dessous :

Tableau 2

| | Préparation de référence | Préparation 1 | Préparation 4 |
|---|---|---|---|
| **Groupements vinyles dans la prise ($\mu$g ; masse 27)** | 1,5 | 3,1 | 1,06 |
| **Densité surfacique** | | | |

(suite)

| | Préparation de référence | Préparation 1 | Préparation 4 |
|---|---|---|---|
| **(groupements/ $nm^2$)** | 0,005 | 0,010 | 0,035 |

**Test de pelage**

Pour conférer un caractère plus général à la mesure de l'adhérence entre les couches de silicone appliquées un test quantitatif de pelage a été mis en oeuvre.

Le test choisi opère sur un composite de 2 enductions supportées :

- une première enduction est appliquée sur un film polyester (PET) ; c'est à dire un film bien plan qui affranchit des effets de rugosité. Cette première enduction est ensuite réticulée thermiquement ;
- une seconde enduction crue et supportée par un tissu polyamide est alors mise au contact de la première. L'ensemble est porté en température pour assurer la réticulation de la seconde couche.

Les conditions mises en oeuvre sont :

- une première enduction de composition de silicone à hauteur de 50 g/$m^2$ sur film polyester ;
- une réticulation d'une minute à 140°C ;
- une seconde enduction de composition de silicone à hauteur de 100 g/$m^2$ sur tissu polyamide 6.6 ;
- contrecollage sur la première couche ;
- réticulation d'une minute sous presse (2 T) à 160°C ;
- mesure de la force de pelage selon une géométrie 180°.

Les valeurs mesurées pour la force de pelage sont exprimées en N/ cm

**Résultats du test de pelage :**

Essai de référence

La préparation de référence est appliquée dans les conditions du test de pelage décrit. La force de pelage mesurée est :

**1,0 N/ cm**

Essai 1

La préparation 1 est appliquée dans les conditions du test de pelage décrit. La force de pelage mesurée est :

**0,7 N/ cm**

Essai 2

La préparation 2 est appliquée dans les conditions du test de pelage décrit. La force de pelage mesurée est :

**0,9 N/ cm**

Essai 3

La préparation 3 est appliquée dans les conditions du test de pelage décrit. La force de pelage mesurée est :

**1,3 N/ cm**

Essai 4

La préparation 4 est appliquée dans les conditions du test de pelage décrit. La force de pelage mesurée est :

**3,1 N/ cm**

Essai 4 bis

A la différence de l'essai 4, la première couche du complexe -celle déposée sur le film polyester- est la préparation de référence tandis que la seconde couche -celle déposée sur le tissu polyamide- reste la préparation 4.
La force de pelage mesurée est :

**1,4 N/ cm**

Essai 4 ter

A la différence de l'essai 4, la première couche du complexe -celle déposée sur le film polyester- reste la préparation 4 mais la seconde couche -celle déposée sur le tissu polyamide- est la préparation de référence
La force de pelage mesurée est :

**3,3 N/ cm**

**Revendications**

**1.** Procédé de réalisation d'un ensemble comprenant plusieurs éléments en silicone réticulés par polyaddition de motifs ≡Si-H sur des motifs ≡Si-alcényle (de préférence ≡Si-vinyle), ces éléments adhérant fermement les uns aux autres, **caractérisé en ce qu'**il comprend les étapes essentielles suivantes :

- **(I)** mise en forme d'un élément en silicone (i) à l'aide d'une préparation silicone liquide (i) comprenant :

  • des polyorganosiloxanes (POS) -A- à motifs ≡Si-alcényle (de préférence ≡Si-vinyle),
  • des polyorganosiloxanes (POS) -B- à motifs ≡Si-H,
  • au moins un catalyseur -C- métallique -due préférence au Platine-,
  • éventuellement au moins une résine POS -D- porteuse de motifs ≡Si-alcényle (de préférence ≡Si-vinyle),
  • éventuellement au moins un inhibiteur de réticulation -E-,
  • éventuellement au moins un promoteur d'adhérence -F-,
  • éventuellement au moins une charge minérale -G-,
  • éventuellement au moins un additif fonctionnel pour conférer des propriétés spécifiques -H-;

- **(II)** réticulation de la préparation silicone liquide (i) mise en forme à l'étape (I), la composition de cette préparation et les conditions de réticulation étant choisies de telle sorte que l'élément silicone réticulé (i) présente une densité surfacique DS en groupements alcényle -de préférence Vinyle- résiduels n'ayant pas réagi, par $nm^2$ définie comme suit:

$$DS \geq 0{,}0015$$

de préférence

$$DS \geq 0,0030$$

et plus préférentiellement encore

$$0,0100 \geq DS \geq 0,0040$$

- **(III)** éventuelle répétition des étapes (I) et (II) n (nombre entier positif) fois, de manière à obtenir n éléments (i) adhérant les uns aux autres,
- **(IV)** mise en forme d'un élément en silicone (ii) consistant à mettre en contact l'élément ou le dernier élément en silicone réticulé (i) avec une préparation silicone liquide (ii) comprenant :

  • des polyorganosiloxanes (POS) -A'- à motifs ≡Si-alcényle (de préférence ≡Si-vinyle),
  • des polyorganosiloxanes (POS) -B'- à motifs ≡Si-H,
  • au moins un catalyseur -C'- métallique -de préférence au Platine-,
  • éventuellement au moins une résine POS -D'- porteuse de motifs ≡Si-alcényle (de préférence ≡Si-vinyle),
  • éventuellement au moins un inhibiteur de réticulation -E'-,
  • éventuellement au moins un promoteur d'adhérence -F'-,
  • éventuellement au moins une charge minérale -G'-,
  • éventuellement au moins un additif fonctionnel pour conférer des propriétés spécifiques -H'-,

- **(V)** réticulation de la préparation silicone liquide (ii) mise en forme à l'étape (IV) pour obtenir l'élément en silicone réticulé (ii) adhérant à l'élément ou au dernier élément (i).

**2.** Procédé selon la revendication 1, **caractérisé en ce que** l'on sélectionne une préparation silicone liquide (i) dans laquelle le ratio R des motifs ≡Si-H sur les motifs ≡Si-alcényle (de préférence ≡Si-Vinyle) est défini comme suit :

$$R \leq 1$$

de préférence

$$0,80 \leq R \leq 0,98.$$

**3.** Procédé selon la revendication 2, **caractérisé en ce que** l'on sélectionne une préparation silicone liquide (i) comprenant au moins un POS -A°- hyperalcénylé (de préférence hypervinylé) pourvoyeur de motifs ≡Si-alcényle (de préférence ≡Si-Vinyle), dont la teneur est supérieure ou égale à au moins 2 % en nombre, de préférence supérieure ou égale au moins 3 % et, plus préférentiellement encore comprise entre 3 et 10 % en nombre,
les motifs ≡Si-alcényle (de préférence ≡Si-Vinyle) étant avantageusement essentiellement portés par des motifs siloxyle D : $-R_2SiO_{2/2}-$.

**4.** Procédé selon l'une quelconque des revendications 1 à 3, **caractérisé :**

- **en ce que** l'ensemble réalisé comporte un support -de préférence souple- et plusieurs éléments en silicone réticulé formant un revêtement multicouche adhérant sur le support ;
- et **en ce que**:

  • l'étape (I) consiste en une application de la préparation silicone liquide (i) sur le support pour former une couche de silicone réticulé (i),
  • et l'étape (IV) consiste en une application de la préparation silicone liquide (ii) sur la couche ou la dernière couche de silicone réticulé (i) et porteuse de groupements réactifs résiduels en surface, pour former une couche de silicone réticulé (ii).

**5.** Procédé selon l'une quelconque des revendications 1 à 4, **caractérisé en ce que** l'ensemble réalisé est un moule ou un objet moulé en silicone.

**6.** Procédé selon l'une quelconque des revendications 1 à 5, **caractérisé en ce que** les étapes (IV) et (V) ne sont mises en oeuvre qu'après une interruption prolongée du procédé.

**7.** Procédé selon la revendication 4, **caractérisé en ce que** la deuxième et dernière préparation silicone liquide est identique ou différente de la première et de préférence différente, et, plus préférentiellement encore exempte de POS hyperalcénylé -A°-.

**8.** Procédé selon l'une quelconque des revendications 1 à 7, dans lequel les POS (-A- & -A'-) choisis présentent des motifs siloxyle de formule:

$$W_a\, Z_b\, SiO_{(4-(a+b))/2} \qquad \textbf{(1)}$$

dans laquelle :

- les symboles W, identiques ou différents, représentent chacun un groupe alcényle, de préférence un alcényle en $C_2$-$C_6$,
- les symboles Z, identiques ou différents, représentent chacun un groupe hydrocarboné monovalent non hydrolysable, exempt d'action défavorable sur l'activité du catalyseur, éventuellement halogéné et, de préférence choisi parmi les groupes alkyles ayant de 1 à 8 atomes de carbone inclus, ainsi que parmi les groupes aryles,
- a est 1 ou 2, b est 0, 1 ou 2 et a + b est compris entre 1 et 3,
- éventuellement au moins une partie des autres motifs sont des motifs de formule moyenne :

$$Z_c\, SiO_{(4-c)/2} \qquad \textbf{(2)}$$

dans laquelle Z a la même signification que ci-dessus et c a une valeur comprise entre 0 et 3.

**9.** Procédé selon l'une quelconque des revendications 1 à 8, dans lequel les POS (-B- & -B'-) choisis présentent des motifs siloxyle de formule:

$$H_d\, L_e\, SiO_{(4-(d+e))/2} \qquad \textbf{(3)}$$

dans laquelle :

- les symboles L, identiques ou différents, représentent chacun un groupe hydrocarboné monovalent non hydrolysable, exempt d'action défavorable sur l'activité du catalyseur, éventuellement halogéné et, de préférence choisi parmi les groupes alkyles ayant de 1 à 8 atomes de carbone inclus, ainsi que parmi les groupes aryles,
- d est 1 ou 2, e est 0, 1 ou 2 et d + e a une valeur comprise entre 1 et 3,
- éventuellement, au moins une partie des autres motifs étant des motifs de formule moyenne :

$$Lg\, SiO_{(4-g)/2} \qquad \textbf{(4)}$$

dans laquelle L a la même signification que ci-dessus et g a une valeur comprise entre 0 et 3.

**10.** Procédé selon l'une quelconque des revendications 1 à 9, **caractérisé en ce que** les groupements alcényle W des POS (-A- & -A'-) et/ou des résines POS (-D- &-D'-) sont des groupements vinyle Vi, portés par des motifs siloxyle D éventuellement M et/ou T.

**11.** Formulation silicone liquide, qui est utilisable notamment comme préparation silicone liquide (i) dans le procédé selon l'une quelconque des revendications 1 à 10, et qui comprend :

- des polyorganosiloxanes (POS) -A- à motifs ≡Si-alcényle (de préférence ≡Si-vinyle),
- des polyorganosiloxanes (POS) -B- à motifs ≡Si-H,
- au moins catalyseur -C- métallique -de préférence au Platine-,
- éventuellement au moins une résine POS -D- porteuse de motifs ≡Si-alcényle (de préférence ≡Si-vinyle),
- éventuellement au moins un inhibiteur de réticulation -E-,

- éventuellement au moins un promoteur d'adhérence -F-,
- éventuellement au moins une charge minérale -G-,
- éventuellement au moins un additif fonctionnel -H- pour conférer des propriétés spécifiques;

**caractérisée par** un ratio R des motifs ≡Si-H sur les motifs ≡Si-alcényle (de préférence ≡Si-Vinyle) défini comme suit :

$$R \leq 1$$

de préférence

$$0,80 \leq R \leq 0,98,$$

et en ce que sa teneur en motifs ≡Si-alcényle (de préférence ≡Si-Vinyle)est supérieure ou égale à au moins 2% en nombre, de préférence supérieure ou égale au moins 3 %, et, plus préférentiellement encore comprise entre 2 et 10 % en nombre,
les motifs ≡Si-alcényle (de préférence ≡Si-Vinyle) étant avantageusement essentiellement portés par des motifs siloxyle D : $-R_2SiO_{2/2}-$.

**12.** Revêtement élastomère silicone réticulé multicouche susceptible d'être obtenu par le procédé selon l'une quelconque des revendications 1 à 10, **caractérisé en ce qu'**il présente une résistance à la délamination de ses couches, mesurée selon un test T, supérieure à 1 N/cm, de préférence supérieure à 2 N/cm et plus préférentiellement encore supérieure à 3 N/cm.

## Claims

**1.** Process for the production of an assembly comprising several silicone elements crosslinked by the polyaddition of ≡Si-H units onto ≡Si-alkenyl (preferably ≡Si-vinyl) units, said elements adhering firmly to one another, **characterized in that** it comprises the following essential steps:

- **(I)** forming a silicone element (i) with a liquid silicone preparation (i) comprising:

  - polyorganosiloxanes (POS) A with ≡Si-alkenyl (preferably ≡Si-vinyl) units,
  - polyorganosiloxanes (POS) B with ≡Si-H units,
  - at least one metal catalyst C, preferably based on platinum,
  - optionally at least one POS resin D carrying ≡Si-alkenyl (preferably ≡Si-vinyl) units,
  - optionally at least one crosslinking inhibitor E,
  - optionally at least one adhesion promoter F,
  - optionally at least one mineral filler G,
  - optionally at least one functional additive H for imparting specific properties,

- **(II)** crosslinking the liquid silicone preparation (i) formed in step (I), the composition of this preparation and the crosslinking conditions being chosen in such a way that the crosslinked silicone element (i) has a surface density SD of unreacted residual alkenyl (preferably vinyl) groups, per $nm^2$, defined as follows:

$$SD \geq 0.0015,$$

preferably

$$SD \geq 0.0030,$$

and particularly preferably

$$0.0100 \geq SD \geq 0.0040.$$

- **(III)** optionally repeating steps (I) and (II) n times (n = positive integer) to give n elements (i) that adhere to one another,
- **(IV)** forming a silicone element (ii) by a process which consists in bringing the crosslinked silicone element or last crosslinked silicone element (i) into contact with a liquid silicone preparation (ii) comprising:

  • polyorganosiloxanes (POS) A' with ≡Si-alkenyl (preferably ≡Si-vinyl) units,
  • polyorganosiloxanes (POS) B' with ≡Si-H units,
  • at least one metal catalyst C', preferably based on platinum,
  • optionally at least one POS resin D' carrying ≡Si-alkenyl (preferably ≡Si-vinyl) units,
  • optionally at least one crosslinking inhibitor E',
  • optionally at least one adhesion promoter F',
  • optionally at least one mineral filler G',
  • optionally at least one functional additive H' for imparting specific properties,

- **(V)** crosslinking the liquid silicone preparation (ii) formed in step (III) to give the crosslinked silicone element (ii) that adheres to the element or last element (i).

**2.** Process according to claim 1, **characterized in that** the ratio R of the ≡Si-H units to the ≡Si-alkenyl (preferably ≡Si-vinyl) units in the selected liquid silicone preparation (i) is defined as follows:

$$R \leq 1,$$

preferably

$$0.80 \leq R \leq 0.98.$$

**3.** Process according to claim 2, **characterized in that** the selected liquid silicone preparation (i) comprises at least one hyperalkenylated (preferably hypervinylated) POS A providing ≡Si-alkenyl (preferably ≡Si-vinyl) units, whose content is greater than or equal to at least 2% by number, preferably greater than or equal to at least 3% and particularly preferably between 3 and 10% by number, the ≡Si-alkenyl (preferably ≡Si-vinyl) units advantageously being carried essentially by siloxy units D: $-R_2SiO_{2/2}-$.

**4.** Process according to any one of claims 1 to 3, **characterized in that**:

- the assembly produced comprises a preferably flexible substrate and several crosslinked silicone elements forming a multilayer coating adhering to the substrate;
- and:

  • step (I) consists in applying the liquid silicone preparation (i) to the substrate to form a crosslinked silicone layer (i),
  • and step (IV) consists in applying the liquid silicone preparation (ii) to the crosslinked silicone layer or last crosslinked silicone layer (i) carrying residual reactive groups on the surface, to form a crosslinked silicone layer (ii).

**5.** Process according to any one of claims 1 to 4, **characterized in that** the assembly produced is a silicone mold or molded object.

**6.** Process according to any one of claims 1 to 5, **characterized in that** steps (IV) and (V) are only carried out after a prolonged interruption of the process.

**7.** Process according to claim 4, **characterized in that** the second and last liquid silicone preparation is identical to

or, preferably, different from the first and, particularly preferably, is devoid of hyperalkenylated POS A°.

**8.** Process according to any one of claims 1 to 7 wherein the chosen POS (A & A') have siloxy units of the formula

$$W_aZ_bSiO_{(4-(a+b))/2} \quad (1)$$

in which:

- the symbols W, which are identical or different, are each an alkenyl group and preferably a $C_2$-$C_6$ alkenyl;
- the symbols Z, which are identical or different, are each a non-hydrolyzable monovalent hydrocarbon group that is devoid of an unfavorable action on the activity of the catalyst, is optionally halogenated and is preferably selected from alkyl groups having from 1 to 8 carbon atoms inclusive, and from aryl groups;
- a is 1 or 2, b is 0, 1 or 2 and a + b is between 1 and 3;
- optionally at least some of the other units are units of the empirical formula

$$Z_cSiO_{(4-c)/2} \quad (2)$$

in which Z is defined as above and c has a value of between 0 and 3.

**9.** Process according to any one of claims 1 to 8 wherein the chosen POS (B & B') have siloxy units of the formula

$$H_dL_eSiO_{(4-(d+e))/2} \quad (3)$$

in which:

- the symbols L, which are identical or different, are each a non-hydrolyzable monovalent hydrocarbon group that is devoid of an unfavorable action on the activity of the catalyst, is optionally halogenated and is preferably selected from alkyl groups having from 1 to 8 carbon atoms inclusive, and from aryl groups;
- d is 1 or 2, e is 0, 1 or 2 and d + e has a value of between 1 and 3;
- optionally at least some of the other units being units of the empirical formula

$$L_gSiO_{(4-g)/2} \quad (4)$$

in which L is as defined above and g has a value of between 0 and 3.

**10.** Process according to any one of claims 1 to 9, **characterized in that** the alkenyl groups W of the POS (A & A') and/or of the POS resins (D & D') are vinyl groups Vi carried by siloxy units D and optionally M and/or T.

**11.** Liquid silicone formulation which can be used especially as a liquid silicone preparation (i) in the process according to any one of claims 1 to 10, and which comprises:

• polyorganosiloxanes (POS) A with ≡Si-alkenyl (preferably ≡Si-vinyl) units,
• polyorganosiloxanes (POS) B with ≡Si-H units,
• at least one metal catalyst C, preferably based on platinum,
• optionally at least one POS resin D carrying ≡Si-alkenyl (preferably ≡Si-vinyl) units,
• optionally at least one crosslinking inhibitor E,
• optionally at least one adhesion promoter F,
• optionally at least one mineral filler G,
• optionally at least one functional additive H for imparting specific properties,

**characterized in that** the ratio R of ≡Si-H units to ≡Si-alkenyl (preferably ≡Si-vinyl) units is defined as follows:

$$R \leq 1,$$

preferably

$$0.80 \leq R \leq 0.98.$$

and **in that** its content of ≡Si-alkenyl (preferably ≡Si-vinyl) units is greater than or equal to at least 2% by number, preferably greater than or equal to at least 3% and particularly preferably between 2 and 10% by number, the ≡Si-alkenyl (preferably ≡Si-vinyl) units advantageously being carried essentially by siloxy units D: $-R_2SiO_{2/2}-$.

**12.** Multilayer crosslinked silicone elastomer coating obtainable by the process according to any one of claims 1 to 10, **characterized in that** it has a layer delamination resistance, measured by a test T, greater than 1 N/cm, preferably greater than 2 N/cm and particularly preferably greater than 3 N/cm.

**Patentansprüche**

**1.** Verfahren zur Herstellung einer Einheit, umfassend mehrere vernetzte Silikonelemente durch Polyaddition von Motiven ≡Si-H auf Motive ≡Si-Alkenyl (vorzugsweise ≡Si-Vinyl), wobei diese Elemente fest aneinander haften, **dadurch gekennzeichnet, dass** es die folgenden wesentlichen Schritte umfasst:

- (I) Formen eines Silikonelements (i) mit Hilfe eines flüssigen Silikonpräparats (i), umfassend:

  • Polyorganosiloxane (POS) -A- mit Motiven ≡Si-Alkenyl (vorzugsweise ≡Si-Vinyl),
  • Polyorganosiloxane (POS) -B- mit Motiven ≡Si-H,
  • mindestens einen metallischen Katalysator -C- - vorzugsweise aus Platin -,
  • eventuell mindestens ein Harz POS -D-, das Träger von Motiven ≡Si-Alkenyl (vorzugsweise ≡Si-Vinyl) ist,
  • eventuell mindestens einen Vernetzungsinhibitor -E-,
  • eventuell mindestens einen Haftungspromotor -F-,
  • eventuell mindestens einen mineralischen Füllstoff -G-,
  • eventuell mindestens einen funktionellen Zusatzstoff, um spezifische Eigenschaften zu verleihen -H-;

- (11) Vernetzen des flüssigen Silikonpräparats (i), das in Schritt (I) geformt wurde, wobei die Zusammensetzung dieses Präparats und die Vernetzungsbedingungen derart gewählt werden, dass das vernetzte Silikonelement (i) eine Oberflächendichte DS in Alkenyl- vorzugsweise Vinyl-Restgruppierungen, die nicht reagiert haben, pro nm2 aufweist, das folgendermaßen definiert ist:

$$DS \geq 0,0015$$

vorzugsweise

$$DS \geq 0,0030$$

und weiter bevorzugt

$$0,0100 \geq DS \geq 0,0040$$

- (III) eventuelles Wiederholen der Schritte (I) und (II) n-mal (wobei n eine ganze positive Zahl ist), um n Elemente (i) zu erhalten, die aneinander haften,
- (IV) Formen eines Silikonelements (ii), darin bestehend, das Element oder das letzte vernetzte Silikonelement (i) mit einem flüssigen Silikonpräparat (ii) in Kontakt zu bringen, umfassend:

  • Polyorganosilxoane (POS) -A'- mit Motiven ≡Si-Alkenyl (vorzugsweise ≡Si-Vinyl),
  • Polyorganosiloxane (POS) -B'- mit Motiven ≡Si-H,

- mindestens einen metallischen Katalysator -C'- - vorzugsweise aus Platin -,
- eventuell mindestens ein Harz POS -D'-, das Träger von Motiven ≡Si-Alkenyl (vorzugsweise ≡Si-Vinyl) ist,
- eventuell mindestens einen Vernetzungsinhibitor -E'-,
- eventuell mindestens einen Haftungspromotor -F'-,
- eventuell mindestens einen mineralischen Füllstoff -G'-,
- eventuell mindestens einen funktionellen Zusatzstoff, um spezifische Eigenschaften zu verleihen, -H'-;

- (V) Vernetzen des flüssigen Silikonpräparats (ii), das in Schritt (IV) geformt wurde, um das vernetzte Silikonelement (ii) zu erhalten, das an dem Element oder dem letzten Element (i) haftet.

2. Verfahren nach Anspruch 1, **dadurch gekennzeichnet, dass** ein flüssiges Silikonpräparat (i) ausgewählt wird, in dem das Verhältnis R der Motive ≡Sei-H zu den Motiven ≡Si-Alkenyl (vorzugsweise ≡Si-Vinyl) folgendermaßen definiert ist:

$$R \leq 1$$

vorzugsweise

$$0{,}80 \leq R \leq 0{,}98.$$

3. Verfahren nach Anspruch 2, **dadurch gekennzeichnet, dass** ein flüssiges Silikonpräparat (i) ausgewählt wird, umfassend mindestens ein HyperAlkenyl- (vorzugsweise Hypervinyl-)POS -A°-, das Motive ≡Si-Alkenyl (vorzugsweise ≡Si-Vinyl) liefert, dessen Gehalt größer oder gleich mindestens 2 % in der Zahl, vorzugsweise größer oder gleich mindestens 3 % ist und weiter bevorzugt zwischen 3 und 10 % in der Zahl beträgt,
wobei die Motive ≡Si-Alkenyl (vorzugsweise ≡Si-Vinyl) vorzugsweise im Wesentlichen von Motiven Siloxyl D: $-R_2SiO_{2/2}-$ getragen werden.

4. Verfahren nach einem der Ansprüche 1 bis 3, **dadurch gekennzeichnet:**

- **dass** die hergestellte Einheit einen - vorzugsweise flexiblen - Träger und mehrere vernetzte Silikonelemente umfasst, die eine am Träger anhaftende mehrschichtige Verkleidung bilden;
- und **dass**
  - der Schritt (I) in einem Aufbringen des flüssigen Silikonpräparats (i) auf den Träger besteht, um eine vernetzte Silikonschicht (i) zu bilden,
  - der Schritt (IV) in einem Aufbringen des flüssigen Silikonpräparats (ii) auf die Schicht oder die letzte vernetzte Silikonschicht (i), die reaktive Restgruppierungen an der Oberfläche trägt, um eine vernetzte Silikonschicht (ii) zu bilden, besteht.

5. Verfahren nach einem der Ansprüche 1 bis 4, **dadurch gekennzeichnet, dass** die hergestellte Einheit eine Gussform oder ein Gussgegenstand aus Silikon ist.

6. Verfahren nach einem der Ansprüche 1 bis 5, **dadurch gekennzeichnet, dass** die Schritte (IV) und (V) erst nach einer längeren Unterbrechung des Verfahrens eingesetzt werden.

7. Verfahren nach Anspruch 4, **dadurch gekennzeichnet, dass** das zweite und letzte flüssige Silikonpräparat identisch mit oder unterschiedlich zum ersten und vorzugsweise unterschiedlich ist und weiter bevorzugt ferner frei von Hyperalkenyl-POS -A°- ist.

8. Verfahren nach einem der Ansprüche 1 bis 7, bei dem die ausgewählten POS (-A- & -A'-) Siloxylmotive folgende Formel aufweisen:

$$W_aZ_bSiO_{(4-(a+b))/2} \qquad (1)$$

wobei:

- die Symbole W, die identisch oder unterschiedlich sind, jeweils eine Alkenylgruppe, vorzugsweise ein Alkenyl bei C2-C6 darstellen,
- die Symbole Z, die identisch oder unterschiedlich sind, jeweils eine monovalente nicht hydrolysierbare Kohlenwasserstoffgruppe darstellen, die frei von einer ungünstigen Wirkung auf die Aktivität des Katalysators sind, eventuell halogeniert ist und vorzugsweise unter den Alkylgruppen mit 1 bis 8 Kohlenstoffatomen inklusive sowie unter den Arylgruppen ausgewählt werden,
- a 1 oder 2, b 0, 1 oder 2 und a+b zwischen 1 und 3 beträgt,
- eventuell mindestens ein Teil der anderen Motive Motive mit der durchschnittlichen Formel:

$$Z_cSiO_{(4-C)/2} \qquad (2)$$

sind, wobei Z dieselbe Bedeutung wie oben hat und c einen Wert zwischen 0 und 3 aufweist.

**9.** Verfahren nach einem der Ansprüche 1 bis 8, bei dem die ausgewählten POS (-B- & -B'-) Siloxylmotive folgende Formel aufweisen:

$$H_dL_eSiO_{(4-(d+e))/2} \qquad (3)$$

wobei:

- die Symbole L, die identisch oder unterschiedlich sind, jeweils eine monovalente nicht hydrolysierbare Kohlenwasserstoffgruppe darstellen, die frei von einer ungünstigen Wirkung auf die Aktivität des Katalysators sind, eventuell halogeniert ist und vorzugsweise unter den Alkylgruppen mit 1 bis 8 Kohlenstoffatomen inklusive sowie unter den Arylgruppen ausgewählt werden,
- d 1 oder 2, e 0, 1 oder 2 und d+e zwischen 1 und 3 beträgt,
- eventuell mindestens ein Teil der anderen Motive Motive mit der durchschnittlichen Formel:

$$L_gSiO_{(4-g)/2} \qquad (4)$$

sind, wobei L dieselbe Bedeutung wie oben hat und g einen Wert zwischen 0 und 3 aufweist.

**10.** Verfahren nach einem der Ansprüche 1 bis 9, **dadurch gekennzeichnet, dass** die Alkenylgruppierungen W der POS (-A- & -A'-) und/oder Harze POS (-D- & -D'-) Vinylgruppierungen Vi sind, die von Siloxylmotiven D eventuell M und/oder T getragen werden.

**11.** Flüssige Silikonformulierung, die insbesondere als flüssiges Silikonpräparat (i) in dem Verfahren nach einem der Ansprüche 1 bis 10 verwendet werden kann, umfassend:

- Polyorganosiloxane (POS) -A- mit Motiven ≡Si-Alkenyl (vorzugsweise ≡Si-Vinyl),
- Polyorganosiloxane (POS) -B- mit Motiven ≡Si-H,
- mindestens einen metallischen Katalysator -C- vorzugsweise aus Platin,
- eventuell mindestens ein Harz POS -D-, das Träger von Motiven ≡Si-Alkenyl (vorzugsweise ≡Si-Vinyl) ist,
- eventuell mindestens einen Vernetzungsinhibitor -E-,
- eventuell mindestens einen Haftungspromotor -F-,
- eventuell mindestens einen mineralischen Füllstoff -G-,
- eventuell mindestens einen funktionellen Zusatzstoff, um spezifische Eigenschaften zu verleihen, -H-;

**gekennzeichnet durch** ein Verhältnis R der Motive ≡Si-H zu den Motiven ≡Si-Alkenyl (vorzugsweise ≡Si-Vinyl), das folgendermaßen definiert ist:

$$R \leq 1$$

vorzugsweise

$$0,80 \leq R \leq 0,98,$$

und dass ihr Gehalt an Motiven ≡Si-Alkenyl (vorzugsweise ≡Si-Vinyl) größer oder gleich mindestens 2 % in der Zahl, vorzugsweise größer oder gleich 3 % ist und weiter bevorzugt zwischen 2 und 10 % in der Zahl beträgt, wobei die Motive ≡Si-Alkenyl (vorzugsweise ≡Si-Vinyl) vorzugsweise im Wesentlichen von Siloxylmotiven D: $-R_2SiO_{2/2}-$ getragen werden.

**12.** Mehrschichtige vernetzte Silikonelastomerverkleidung, die durch das Verfahren nach einem der Ansprüche 1 bis 10 erhalten werden kann, **dadurch gekennzeichnet, dass** sie einen Aufblätterungswiderstand ihrer Schichten, gemessen nach einem T-Test, über 1 N/cm, vorzugsweise über 2 N/cm und weiter bevorzugt über 3 N/cm aufweist.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 0431979 A
- US 3220972 B
- US 3284406 B
- US 3436366 B
- US 3697473 B
- US 4340709 B
- US 3159601 A
- US 3159602 A
- US 3220972 A
- EP 0057459 A
- EP 0188978 A
- EP 0190530 A
- US 3419593 A
- US 3715334 A
- US 3377432 A
- US 3814730 A
- FR 1528464 B
- FR 2372874 A
- FR 2764894 B